# EUROPÄISCHE PATENTSCHRIFT

(11) **EP 3 442 499 B1**
(45) Veröffentlichungstag und Bekanntmachung des Hinweises auf die Patenterteilung: **21.10.2020**
(21) Anmeldenummer: 17710549.1
(22) Anmeldetag: 15.03.2017
(51) Int. Cl.: A61K 9/00, A61J 1/20, A61J 3/00, G01G 17/04, G01G 21/23, G01G 21/22, A61J 1/22

(54) **WAAGE UND ANLAGE ZUR HERSTELLUNG EINER MEDIZINISCHEN ZUBEREITUNG**
WEIGHING DEVICE AND INSTALLATION FOR PRODUCING A MEDICAL PREPARATION
BALANCE ET INSTALLATION DESTINEES A FABRIQUER UNE PREPARATION MEDICAMENTEUSE

(30) Priorität: 15.03.2016 EP 16160428
(43) Veröffentlichungstag der Anmeldung: 20.02.2019
(73) Patentinhaber: Fresenius Kabi Deutschland GmbH, 61352 Bad Homburg (DE)
(72) Erfinder: BIEHL, Martin, 66606 St. Wendel (DE); HOCK, Michael, 35516 Münzenberg (DE); SCHÖBEL, Ulla, 06366 Köthen (DE); BORGWARD, Marcel, 74196 Neuenstadt/Stein am Kocher (DE); LENKEIT, Holger, 06844 Dessau (DE); LAMPRECHT, Dirk, 91054 Erlangen (DE); MAIER, Sebastian, 90579 Langenzenn (DE)
(74) Vertreter: Fresenius Kabi Deutschland GmbH
(86) Internationale Anmeldenummer: PCT/EP2017/056098
(87) Internationale Veröffentlichungsnummer: WO 2017/158008

(56) Entgegenhaltungen:
- EP-A1- 1 779 830
- US-A1- 2006 137 915
- US-A1- 2008 230 281
- US-A1- 2014 373 975

## Beschreibung

### Gebiet der Erfindung

Die Erfindung betrifft eine Waage zur Wägung eines Zielbehälters. Insbesondere betrifft die Erfindung eine Waage, mittels welcher der Zielbehälter einer Anlage zum Herstellen einer medizinischen Zubereitung gewogen wird.

### Hintergrund der Erfindung

Anlagen zum Herstellen einer medizinischen Zubereitung, insbesondere Anlagen zum Dosieren einer Zubereitung aus verschiedenen Bestandteilen zur parenteralen Ernährung sind bekannt. Diese werden auch als TPN-Compounder (TPN = Total Parenteral Nutrition) bezeichnet. Bekannte und im Markt befindliche Anlagen, wie beispielsweise das System MultiComp® der Firma Fresenius, umfassen eine computergesteuerte Pumpeneinheit, mittels der aus einer Mehrzahl von Quellbehältern Flüssigkeiten in einen Zielbehälter transferiert werden, um so im Zielbehälter eine medizinische Zubereitung, bestehend aus verschiedenen Komponenten, bereitzustellen.

Bei derartigen Anlagen ist es aus der Praxis bekannt, den Zielbehälter, welcher insbesondere als Infusionsbeutel ausgebildet sein kann, zu wiegen, um die Mengen der eingefüllten Flüssigkeiten zu überwachen und/oder zu steuern.

Bei bekannten, auf dem Markt befindlichen Anlagen ist das Anbringen dieses Zielbehälters oft umständlich. Es ist insbesondere schwierig, verschiedenartige Zielbehälter, beispielsweise Infusionsbeutel und/oder Spritzen, an der Waage anzubringen. Der Zielbehälter kann während bzw. zumindest am Ende eines Dosierschritts gewogen werden. Dabei kann es zu unerwünschten Krafteinträgen durch den Schlauch, mit dem der Zielbehälter befüllt wird, kommen, welche das Messergebnis verfälschen

EP 1 779 830 offenbart eine Anlage zum Herstellen einer medizinischen Zubereitung, umfassend eine Mehrzahl von Quellbehältern sowie einen Zielbehälter, der auf einer Waage angeordnet ist.

### Aufgabe der Erfindung

Der Erfindung liegt demgegenüber die Aufgabe zugrunde, eine Waage bereit zu stellen, welche insbesondere zur Verwendung mit einem TPN-Compounder ausgebildet ist, und mittels welcher sich auf einfache Weise verschiedenartige Zielbehälter, insbesondere Infusionsbeutel und Spritzen, wiegen lassen.

### Zusammenfassung der Erfindung

Die Aufgabe der Erfindung wird bereits durch eine Waage, sowie durch eine Anlage zum Herstellen einer medizinischen Zubereitung nach einem der unabhängigen Ansprüche gelöst. Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft eine Waage zur Wägung eines Zielbehälters. Insbesondere ist die Waage ausgebildet für eine Anlage zum Herstellen einer medizinischen Zubereitung, insbesondere für einen TPN-Compounder. Hierzu umfasst die Waage vorzugsweise eine Schnittstelle, mittels der eine Steuerungseinrichtung der Anlage zum Herstellen der medizinischen Zubereitung die Messwerte der Waage erfassen kann.

Die Waage umfasst eine Waagschale zum Einlegen oder Auflegen des Zielbehälters. Die Waagschale ist insbesondere ausgebildet, um Infusionsbeutel und/oder Spritzen einlegen oder auflegen zu können.

Gemäß der Erfindung umfasst die Waagschale eine abnehmbare Einrichtung, welche in zumindest zwei oder genau zwei Orientierungen auf der Waagschale angeordnet werden kann. Hierunter wird verstanden, dass die Einrichtung abgenommen und derart gedreht werden kann, dass die vorherige Unterseite nach oben zeigt. Sodann kann die Einrichtung wieder auf die Waagschale aufgelegt werden. Die Einrichtung kann somit derart in zwei Orientierungen angeordnet werden, dass eine vorher nach unten zeigende Seite der abnehmbaren Einrichtung nach einer Drehung nach oben zeigt. Vorzugsweise ist die abnehmbare Einrichtung als Platte ausgebildet.

Die abnehmbare Einrichtung, vorzugsweise die Platte, weist zumindest auf einer Seite zumindest ein Befestigungsmittel für einen Zielbehälter auf. Das Befestigungsmittel kann auch kurz als Befestigung bezeichnet werden. Die abnehmbare Einrichtung trägt das zumindest eine Befestigungsmittel. Sie kann daher auch als Träger oder Trägerplatte bezeichnet werden.

Durch einfaches Abnehmen und Herumdrehen der Einrichtung, vorzugsweise der Platte, kann das Befestigungsmittel von der Waagschale entfernt und/oder gegen ein anderes Befestigungsmittel ausgetauscht werden, welches sich auf der gegenüberliegenden Seite, z.B. der Platte, befindet.

Es ist insbesondere vorgesehen, dass die das Befestigungsmittel als ein Spritzenhalter bereitgestellt wird. Der Spritzenhalter ist in einer Ausgestaltung als ein, vorzugsweise klauenartiges, Klemmelement ausgebildet, in welchem im Falle, dass eine Spritze befüllt werden soll, diese eingeklemmt werden kann.

Die zu befüllende Spritze ist so lagegesichert, was insbesondere die Gefahr des unbeabsichtigten Einleitens von Kräften bei einer Wägung aufgrund eines Anschluss-Schlauches reduziert.

Weiter kann, wie es bei einer Ausführungsform der Erfindung vorgesehen ist, die abnehmbare Einrichtung auf der Seite, auf der der Spritzenhalter angeordnet ist, ein weiteres Befestigungsmittel aufweisen. Vorzugsweise weist die abnehmbare Einrichtung ein erstes Befestigungsmittel für einen ersten Infusionsbeutel auf. Das erste Befestigungsmittel kann auch kurz als erste Befestigung bezeichnet werden. In einer Ausführungsform ist das erste Befestigungsmittel als Formschlusselemente, insbesondere als Stifte, ausgebildet, auf welche der erste Infusionsbeutel, der zwei korrespondierende Öffnungen, insbesondere Ösen, aufweist, aufgeschoben wird.

Bei dieser Ausführungsform der Erfindung ist vorgesehen, dass auf einer Seite der Einrichtung, vorzugsweise der Platte, sowohl ein Befestigungsmittel für eine Spritze als auch ein Befestigungsmittel für einen, vorstehend genannten ersten Infusionsbeutel vorhanden ist.

Das Befestigungselement für die Spritze ist beabstandet von dem ersten Befestigungsmittel für den ersten Infusionsbeutel, insbesondere den Formschlusselementen, angeordnet.

Das erste Befestigungsmittel und/oder der eingelegte erste Infusionsbeutel ist bzw. sind derart ausgebildet, dass dieser nicht auf dem Spritzenhalter aufliegt.

Bei einer Ausführungsform weist die Waagschale in einem Bereich, der nicht von der Einrichtung, vorzugsweise der Platte, im eingesetzten Zustand abdeckt ist, ein zweites Befestigungsmittel für einen zweiten Infusionsbeutel auf. In einer Ausführungsform der Erfindung werden Formschlusselemente, insbesondere Stifte, als das zweite Befestigungsmittel bereitgestellt. Das zweite Befestigungsmittel kann auch kurz als zweite Befestigung bezeichnet werden.

Es ist insbesondere bei dieser Ausführungsform der Erfindung vorgesehen, dass sowohl die Waagschale als auch die abnehmbare Einrichtung jeweils Befestigungsmittel, insbesondere Formschlusselemente, für einen Infusionsbeutel aufweist.
Die an der Waagschale angeordneten Formschlusselemente sind weiter voneinander beabstandet als die Formschlusselemente an der abnehmbaren Einrichtung, insbesondere an der Platte.

Diese Ausführungsform der Erfindung dient der Bereitstellung eines Systems, bei welchem auf einfache Weise Infusionsbeutel in zwei verschiedenen Größen sowie Spritzen zur Wägung aufgelegt werden können.

Im Falle der Verwendung eines größeren Infusionsbeutels wird die Seite einer als Platte ausgebildeten Einrichtung, auf welche der Spritzenhalter angeordnet ist, derart gedreht, dass der Spritzenhalter unten liegt. Vorzugsweise ist die Oberseite der Platte in diesem Zustand eben.

Der größere zweite Infusionsbeutel kann nunmehr an dem zweiten Befestigungsmittel der Waagschale befestigt, insbesondere eingehängt, werden und liegt weder auf den Formschlusselementen der Platte für den kleineren Infusionsbeutel, noch auf dem Spritzenhalter auf, da sich diese Elemente auf der Unterseite befinden.

Soll ein kleinerer erster Infusionsbeutel befüllt werden, wird die vorzugsweise als Platte ausgebildete Einrichtung derart umgedreht, dass das erste Befestigungsmittel, insbesondere die Stifte, zugänglich ist, um den kleineren ersten Infusionsbeutel einzulegen, insbesondere einzuhängen. Aufgrund der geringeren Abmessungen des kleineren Infusionsbeutels ist dieser so klein, dass dieser sich im aufgelegten Zustand nicht mit dem Spritzenhalter überschneidet.

Es versteht sich, dass alternativ zum kleineren Infusionsbeutel auch eine Spritze in den Spritzenhalter eingelegt und so befüllt werden kann.

Bei einer Weiterbildung der Erfindung ist mit der Einrichtung, vorzugsweise ausgebildet als Platte, eine Aufnahme für ein Kalibriergewicht abdeckbar. Die abnehmbare Einrichtung stellt in dieser Ausgestaltung eine Abdeckung bereit.

Diese Ausführungsform der Erfindung ermöglicht eine kompakte Ausgestaltung einer Waage, bei welcher das Kalibriergewicht definiert eingesetzt werden kann. Es ist insbesondere vorgesehen, dass die Waagschale oder ein Halter der Waagschale eine Ausnehmung, insbesondere eine zylindrische Ausnehmung, aufweist, in welche das Kalibriergewicht zum Kalibrieren der Waage eingelegt oder eingesetzt werden kann.

Um die Waage kompakt auszugestalten, ragt das eingesetzte Kalibriergewicht vorzugsweise aus der Waagschale heraus. Die Kalibrierung wird mit abgenommener Einrichtung oder Platte durchgeführt.

Bei einer Weiterbildung der Erfindung ist die Waagschale gegenüber einer Horizontalen schräg gestellt. Insbesondere ist die Waagschale in einem Winkel zwischen 5° und 40°, vorzugsweise zwischen 10° und 20°, gegenüber der Horizontalen angeordnet. Die Waagschale bzw. derjenige der Teil der Waagschale, auf welcher bzw. welchem der Zielbehälter aufgelegt wird, steht also im aufgestelltem Zustand der Waagschale nicht horizontal. Dies ermöglicht eine bessere Zugänglichkeit, ein verbessertes Fließverhalten in den Beutel und verbessert des Weiteren die Positionierung insbesondere eines Infusionsbeutels, der z.B. auf die Formschlusselemente aufgeschoben wird. Aufgrund der Schwerkraft wird ein präziseres Einhängen des Infusionsbeutels an den Formschlusselementen ermöglicht. Vorzugsweise werden, wie bereits zuvor dargestellt, als Formschlusselemente für den Infusionsbeutel zumindest zwei voneinander beabstandete Stifte verwendet, so dass der Infusionsbeutel, bezogen auf die Ebene der Waagschale, in beiden Freiheitsgraden fixiert ist.

Bei einer Weiterbildung der Erfindung umfasst die Waagschale zwei, vorzugsweise nach oben, abgewinkelte Seitenteile.

Insbesondere ist die Waagschale in der Art einer Rutsche ausgebildet, bei welcher sich die ersten Befestigungsmittel, vorzugsweise die Formschlusselemente, für einen ersten Infusionsbeutel in einem oberen Bereich der schräg stehenden rutschenartigen Anordnung befinden.

Durch die abgewinkelten Seitenflügel, welche vorzugsweise in einem Winkel zwischen 20° und 40° abgewinkelt sind, wird ebenfalls die Positionierung eines Infusionsbeutels verbessert. Gleichzeitig wird das Einlegen eines Infusionsbeutels erleichtert, da durch die rutschenartige Form der Infusionsbeutel beim Einlegen zentriert wird.

Bei einer Weiterbildung der Erfindung ist zwischen der Waagschale und einer Wägezelle ein Überlastschutz angeordnet.

Als Wägezelle wird vorzugsweise eine Wägezelle mit hoher Genauigkeit verwendet, insbesondere eine Wägezelle, die eine Genauigkeit von 0,1 g, bevorzugt von 0,01 g aufweist.

Derartige Wägezellen sind empfindlich. Um die Wägezelle vor Beschädigungen im Falle des Aufbringens zu hoher Last zu schützen, ist ein Überlastschutz vorgesehen.

Dieser ist bei einer bevorzugten Ausführungsform der Erfindung als vorgespannte Feder ausgebildet, welche zwischen einem Träger für die Waagschale und der Wägezelle angeordnet ist.

Die vorgespannte Feder, welche sich insbesondere in einem Gehäuse befindet, leitet bis zu einem durch die Federkonstante und Vorspannung vorbestimmten Gewicht die Kraft zur Wägezelle weiter.

Außerhalb des beabsichtigten Messbereichs, also bei zu hoher Last, federt die Feder ein und ein mit der Feder verbundenes Bauteil geht auf Block, so dass mit der Wägezelle verbundene Komponenten nicht weiter einfedern können. Die Wägezelle erfährt so keine höhere Kraft und ist vor Beschädigungen geschützt.

Die Waagschale ist vorzugsweise von der Wägezelle abnehmbar. Wenn in nicht vorgesehener Weise der Benutzer der Waage an der Waagschale zieht, so wird diese herausgezogen, was die Gefahr einer Beschädigung der Wägezelle reduziert.

Der Benutzer kann so zudem die Waagschale beispielsweise zu Reinigungs- oder Demontagezwecken leicht abnehmen.

Die Waagschale und/oder die insbesondere als eine Platte bereitgestellte abnehmbare Einrichtung sind vorzugsweise aus einem leichten Material, wie z.B. Aluminium oder einer Aluminiumlegierung, ausgebildet.

Um eine hohe Dauerbeständigkeit der Materialien zu gewährleisten, sind die Waagschale und/oder die insbesondere als Platte bereitgestellte abnehmbare Einrichtung vorzugsweise beschichtet, insbesondere mit einer Nickelbeschichtung.

Die Erfindung betrifft des Weiteren eine Anlage zum Herstellen einer medizinischen Zubereitung, welche eine Mehrzahl von Quellbehältern sowie einen Zielbehälter umfasst. Der Zielbehälter ist auf einer Waage, insbesondere auf einer vorstehend beschriebenen Waage, angeordnet oder positionierbar.

Mittels der Anlage zum Herstellen einer medizinischen Zubereitung werden die eingangs beschriebenen Flüssigkeiten aus den Quellbehältern in den Zielbehälter transferiert, um dort eine individuelle Zusammensetzung zuzubereiten. Dies erfolgt in der Regel computergesteuert.

Gemäß der Erfindung umfasst die Waage ein austauschbares Befestigungsmittel für den Zielbehälter.

Insbesondere kann die Waage einen abnehmbaren Spritzenhalter umfassen. Dieser kann insbesondere Teil der zuvor beschriebenen abnehmbaren Einrichtung, insbesondere der Platte, sein.

Durch einen abnehmbaren Spritzenhalter lassen sich auf einfache Weise sowohl Infusionsbeutel als auch Spritzen in definierter Position auf der Waage anordnen, um diese mittels der Anlage zum Herstellen einer medizinischen Zubereitung zu befüllen.

Die Waage ist hierzu vorzugsweise durch eine Schnittstelle mit einer elektronischen Steuerungseinrichtung für die Anlage verbunden, so dass mittels der Waage die in den Zielbehälter transferierte Flüssigkeitsmenge überprüfbar ist.

Die Anlage zum Herstellen der medizinischen Zubereitung zusammen mit der Waage ist vorzugsweise modular aufgebaut, wobei die Waage als separates, abnehmbares Modul ausgebildet ist.

Ein Anlagenmodul kann beispielsweise die Pumpe zum Transferieren der Flüssigkeiten sowie Ventile umfassen, um die Entnahme aus den jeweiligen Quellbehältern zu steuern.

So lässt sich ein leichtes und kompaktes System bereitstellen, bei dem insbesondere die einzelnen Module von einer einzigen Person getragen werden können. Vorzugsweise umfasst die Waage einen Schlauchhalter, der auf etwa gleicher Höhe liegt wie ein Schlauchhalter eines angrenzenden Anlagenmoduls. So wird die Gefahr des unerwünschten Einleitens von Kräften aufgrund des Anschluss-Schlauches des Zielbehälters auf die Waage reduziert.

### Kurzbeschreibung der Zeichnungen

Der Gegenstand der Erfindung soll im Folgenden Bezug nehmend auf ein Ausführungsbeispiel anhand der Zeichnungen Fig. 1 bis Fig. 11 erläutert werden.
Fig. 1 ist eine perspektivische Ansicht eines Ausführungsbeispiels einer erfindungsgemäßen Waage.
Fig. 2 ist eine weitere perspektivische Ansicht, bei welcher im Unterschied zu Fig. 1 eine Platte derart gedreht ist, dass ein Spritzenhalter zugänglich ist.
Fig. 3 zeigt die in Fig. 2 dargestellte Waage mit eingesetzter Spritze.
Fig. 4 zeigt die in Fig. 2 dargestellte Waage mit eingelegtem Infusionsbeutel.
Fig. 5 zeigt die in den Fig. 1 bis Fig. 4 dargestellte Waage in perspektivischer Ansicht, wobei nunmehr die Platte abgenommen ist.
Fig. 6 zeigt die Waage mit eingesetztem Kalibriergewicht in perspektivischer Ansicht.
Fig. 7 und Fig. 8 sind perspektivische Ansichten der Platte, die den Spritzenhalter umfasst.
Fig. 9 ist eine Schnittansicht der Waage.
Fig. 10 ist eine Detailansicht der Fig. 9.
Fig. 11 zeigt eine Anlage zum Herstellen medizinischer Zubereitungen, in welcher die in den Zeichnungen Fig. 1 bis Fig. 10 dargestellte Waage integriert ist.

### Detaillierte Beschreibung der Zeichnungen

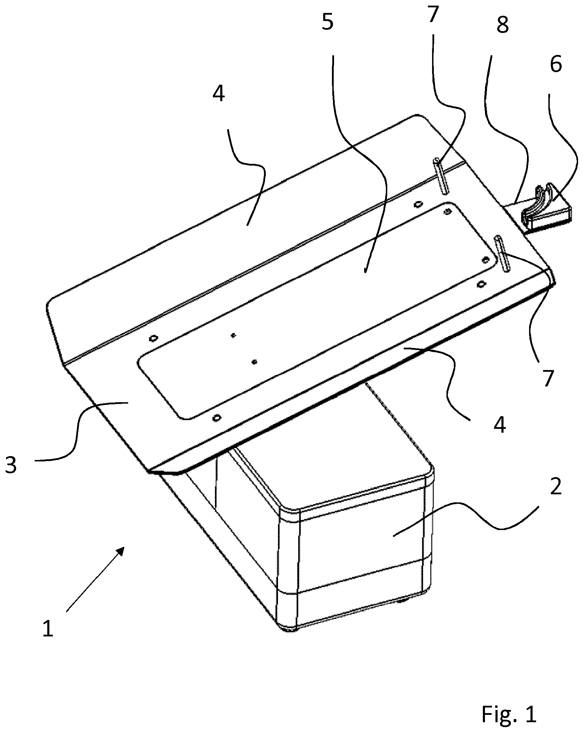

Fig. 1 zeigt ein Ausführungsbeispiel einer erfindungsgemäßen Waage 1 in perspektivischer Ansicht. Die Erläuterung der Waage 1 erfolgt an einem Ausführungsbeispiel, bei dem die abnehmbare Einrichtung als Platte 5 ausgebildet ist.

Die Waage 1 umfasst ein Gehäuse 2, in welchem die Wägezelle 20 sowie elektronische Steuerungs- und Regelungskomponenten (nicht dargestellt) angeordnet sind.

Das Gehäuse 2 kann, wie in dieser Ausführungsform dargestellt, im Wesentlichen quaderförmig ausgebildet sein.

Die Haupterstreckungsrichtung des Gehäuses 2 kreuzt sich in diesem Ausführungsbeispiel in einer Aufsicht von oben im rechten Winkel mit der Haupterstreckungsrichtung der Waagschale 3. So ist eine bessere Zugänglichkeit der Waagschale 3 beim Einlegen der Zielbehälter gewährleistet.

Die Waagschale 3 ist rutschenartig oder -förmig ausgebildet und umfasst nach oben abgewinkelte Seitenflügel 4.

Weiter ist die Waagschale 3 gegenüber der Horizontalen gekippt, d.h. die Waagschale 3 läuft in Richtung der Stifte 7 schräg nach oben.

Die Stifte 7 dienen als Formschlusselemente zum Einlegen eines Infusionsbeutels (nicht dargestellt). Der hier beschriebene Infusionsbeutel wird im allgemeinen Teil der Beschreibung als zweiter Infusionsbeutel bezeichnet.

Die Waagschale 3 umfasst eine abnehmbare Platte 5, welche in diesem Ausführungsbeispiel in einer Ausnehmung 16 der Waagschale 3 eingelegt ist.

Die Platte 5 ist in dieser Darstellung eben ausgebildet.

An den von der Platte 5 beabstandeten Stiften 7 kann ein Infusionsbeutel eingehängt werden, welcher sodann zumindest abschnittsweise auf der Platte 5 aufliegt.

Am oberen Ende der Waagschale 3 ist mittels eines Halters 8 ein Schlauchhalter 6 befestigt, durch welchen der Schlauch, mit welchem der Infusionsbeutel befüllt wird (nicht dargestellt), geführt wird. Der Halter 8 ist von der Waagschale 3 abgewinkelt und liegt in etwa horizontal.

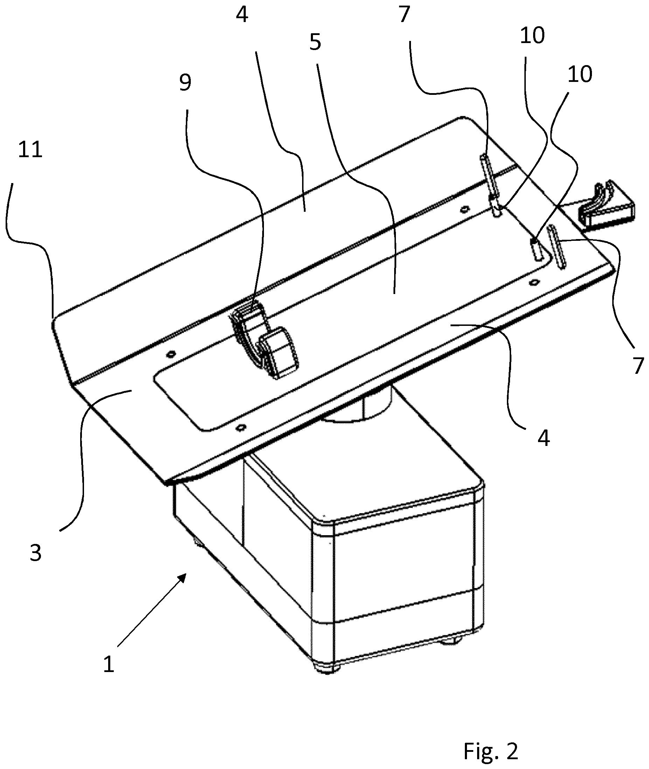

Fig. 2 zeigt nunmehr die Waage 1 in dem Zustand, in dem die in Fig. 1 bereits dargestellte Platte 5, herausgenommen und um 180° gedreht wurde. Die vorher nach unten zeigende Seite der Platte 5 zeigt nun nach oben.

Zu erkennen ist nunmehr, dass in der Waagschale 3 die Platte 5 eingelassen ist und dass die Platte 5 einen Spritzenhalter 9 umfasst. Dieser ist im Wesentlichen U-förmig ausgebildet. Der Spritzenhalter 9 befindet sich in einem unteren Abschnitt der Platte 5 und ist mithin von den Stiften 7 beabstandet.

Neben dem Spritzenhalter 9 weist die Platte in einem oberen Abschnitt zwei Stifte 10 auf, welche dem Einhängen eines Infusionsbeutels 13 dienen. Der Infusionsbeutel 13 weist hierfür Ösen auf. Der hier genannte Infusionsbeutel wird im allgemeinen Teil der Beschreibung als erster Infusionsbeutel bezeichnet.

Die in dieser Darstellung nach oben gerichtete Seite der Platte 5 weist also sowohl Befestigungsmittel für eine Spritze, den Spritzenhalter 9, als auch Befestigungsmittel für einen Infusionsbeutel 13, die Stifte 10, auf.

Weiter ist zu erkennen, dass die Kanten 11 der Waagschale 3 abgerundet sind.

Die Waagschale 3 hat, einschließlich der Seitenflügel 4, vorzugsweise eine Länge von 300 bis 500 mm und eine Breite von 200 bis 300 mm.

Die Platte 5 hat vorzugsweise eine Länge zwischen 260 und 300 mm und eine Breite zwischen 70 und 120 mm.

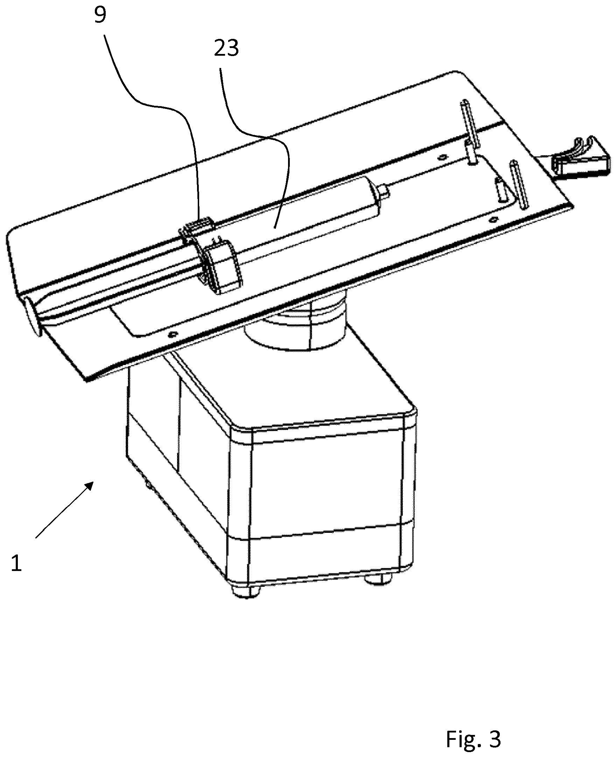

Fig. 3 zeigt, wie in die Waage 1 eine Spritze 23 eingesetzt ist.

Die Spritze 23 ist in den Halter 9 eingeklemmt und kann so befüllt werden.

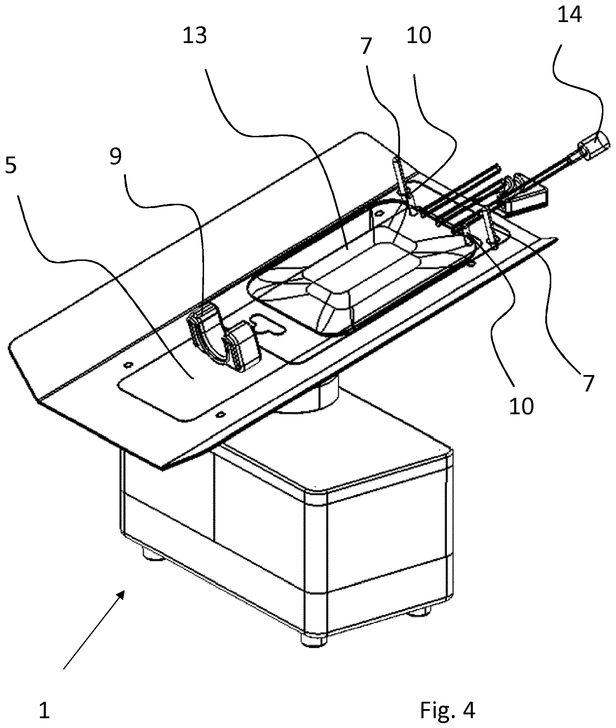

Fig. 4 zeigt die Waage 1 in dem bereits in Fig. 2 dargestellten Zustand, bei welchem also die Platte 5 so gedreht ist, dass der Spritzenhalter 9 nach oben ragt.

Nunmehr ist aber keine Spritze 23 im Spritzenhalter 9 eingesetzt, sondern ein Infusionsbeutel 13 ist oberhalb des Spritzenhalters 9 in die Stifte 10 eingehängt.

Es handelt sich hierbei um einen Infusionsbeutel 13, welcher derart klein ist, dass dieser nicht auf dem Spritzenhalter 9 aufliegt. Der hier dargestellte kleinere Infusionsbeutel 13 kann daher in die an der Platte 5 angebrachten Stifte 10 eingehängt werden.

Um einen größeren Infusionsbeutel einzuhängen (nicht dargestellt), wird die Waage in den in Fig. 1 dargestellten Zustand gebracht, indem die Platte 5 herumgedreht wird, so dass diese lediglich eine ebene Fläche bildet, und der größere Infusionsbeutel in die Stifte 7 eingehängt werden kann.

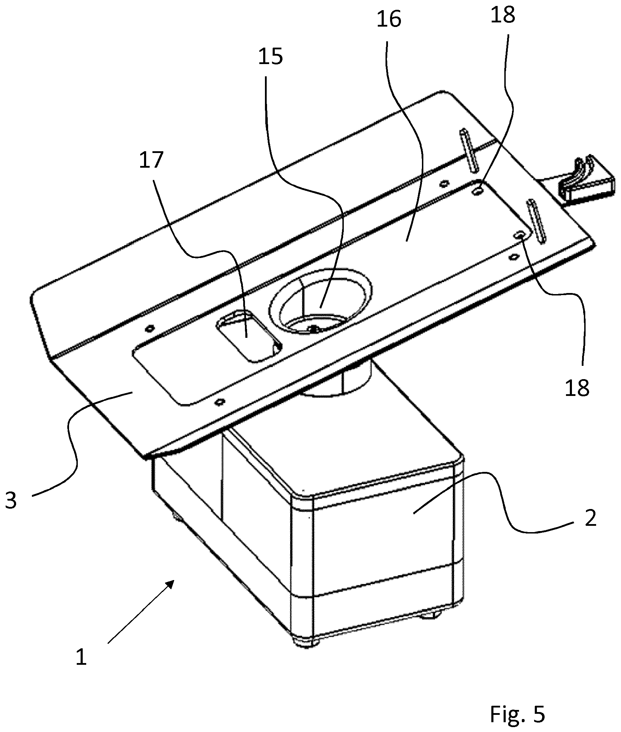

Fig. 5 zeigt die in den vorgehenden Zeichnungen dargestellte Waage 1, wobei nunmehr die Platte 5 abgenommen ist.

Zu erkennen ist, dass die Waagschale 3 eine Ausnehmung 16 aufweist. Diese ist als Vertiefung gegenüber der angrenzenden Waagschale 3 ausgebildet und dient dem Einsetzen der Platte 5.

Die Tiefe der Ausnehmung 16 ist so bemessen, dass die Oberseite der einlegte Platte 5 bündig mit der angrenzenden Waagschale 3 fluchtet.

Weiter ist zu erkennen, dass die Waagschale 3 im Bereich der Ausnehmung 16 eine Öffnung 17 umfasst, durch welche der Spritzenhalter 9 hindurch ragt, wenn die Platte 5 mit der ebenen Seite nach oben liegt.

Die an der Platte 5 vorhandenen Stifte 10 zur Aufnahme des kleineren Infusionsbeutels 13 ragen dann durch die Löcher 18, welche ebenfalls im Bereich der Ausnehmung 16 in die Waagschale 3 eingebracht sind.

Weiter zu erkennen ist eine, vorzugsweise zylindrisch ausgebildete, Aufnahme 15, welche Waagschale 3 und Gehäuse 2 koppelt.

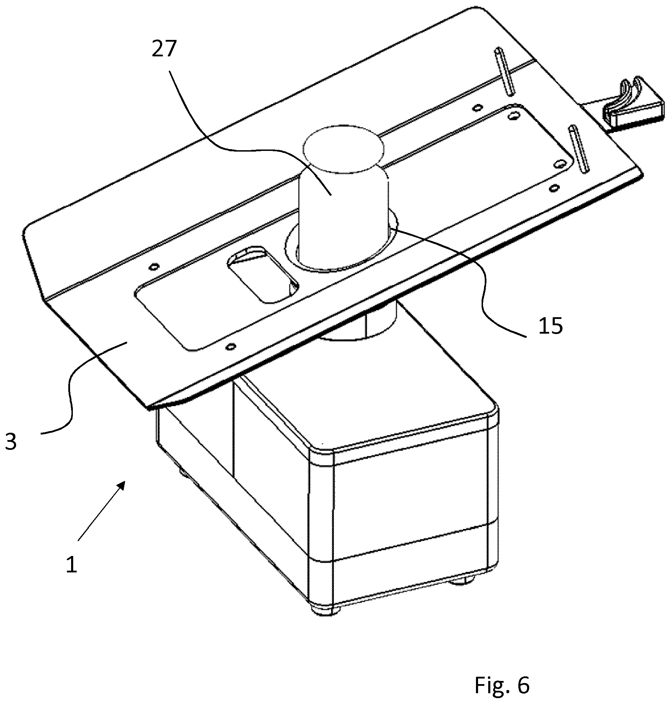

Wie in der perspektivischen Darstellung in Fig. 6 zu sehen ist, kann ein Kalibriergewicht 27 in die Aufnahme 15 eingesetzt werden. Das Kalibriergewicht 27 ragt dabei aus der Waagschale 3 heraus. Dies ermöglicht eine besonders kompakte Ausgestaltung bei gleichzeitig definierter Positionierung des Kalibriergewichts 27.

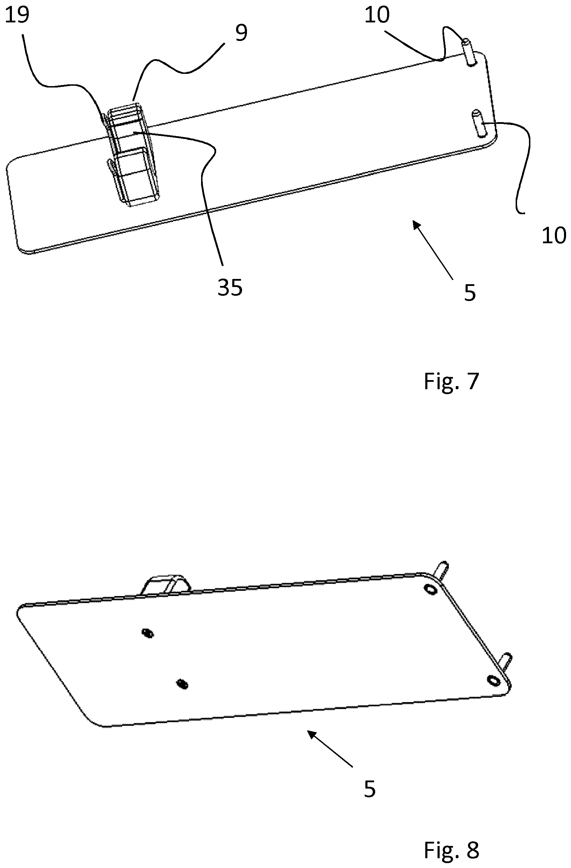

Fig. 7 und Fig. 8 zeigen perspektivische Darstellungen der zuvor dargestellten Platte 5.

Wie in Fig. 7 gut zu erkennen ist, weist die Platte 5 neben den Stiften 10 den Spritzenhalter 9 auf.

Der Spritzenhalter 9 besteht in diesem Ausführungsbeispiel aus einem U-förmigen Träger 35. Dieser ist beispielsweise als Kunststoffspritzgussteil ausgebildet.

Weiter umfasst der Träger 9 einen U-förmig ausgebildeten Bügel 19, vorzugsweise aus Metall, und welcher als federndes Kraftschlusselement zum Halten der Spritze 23 dient.

Bei einer alternativen Ausgestaltung ist es aber auch möglich, dass der U-förmige Träger 35 allein, also ohne separaten Bügel 19, eine Klemmwirkung herbeiführt.

Fig. 8 zeigt die gegenüberliegende Seite der Platte 5. Zu erkennen ist, dass die Platte 5 auf dieser Seite eben ausgebildet ist und keine herausragenden Befestigungsmittel aufweist. Die Ecken der Platte 5 sind abgerundet.

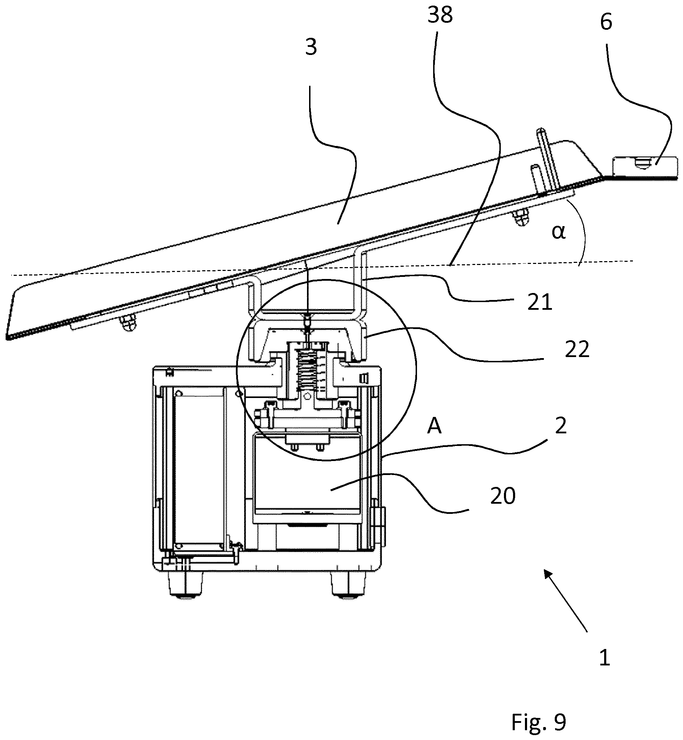

Fig. 9 zeigt eine Schnittansicht der Waage 1. Zu erkennen ist, dass die Waagschale 3 einen Sockel 21 aufweist. Dieser kann zylinderförmig ausgebildet sein. Der Sockel 21 bildet gleichzeitig die Aufnahme 15 für das Kalibriergewicht 27.

Mit dem Sockel 21 ist die Waagschale 3 über einen Träger 22 mit einer im Gehäuse 2 integrierten Wägezelle 20 verbunden. Die Waagschale 3 kann durch bloßes nach oben Ziehen abgenommen werden.

Weiter ist zu erkennen, dass die Waagschale 3 in ihrer Haupterstreckungsrichtung gegenüber der Horizontalen, welche durch die gestrichelte 38 symbolisiert ist, um den Winkel α schräg nach oben in Richtung des Schlauchhalters 6 gekippt ist. In diesem Ausführungsbeispiel beträgt der Winkel α etwa 15°.

Die Waagschale 3 ist fest mit dem Sockel 21 verbunden, sie kann insbesondere auch einstückig mit dem Sockel 21 ausgebildet sein. Der Winkel α ist daher hier nicht verstellbar.

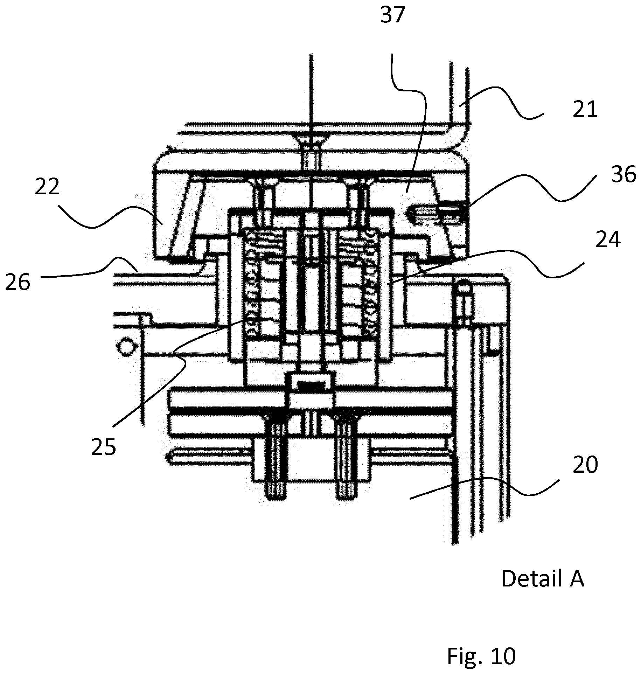

Fig. 10 ist eine Detaildarstellung des Bereiches A der Fig. 9.

Zu erkennen ist auch in dieser Darstellung, wie der Sockel 21 der Waagschale 3 mit dem Träger 22 verbunden ist.

Der Träger 22 sitzt seinerseits auf einem Federgehäuse 24 auf, in welchem eine Schraubenfeder 35 unter Vorspannung eingesetzt ist.

Dieses Federgehäuse 24 ist wiederum mit der Wägezelle 20 verbunden.

Die Gewichtskraft eines auf die Waage 1 gelegten Gegenstandes wird über die Feder 25 an die Wägezelle 20 weitergeleitet.

Im zulässigen Betriebsbereich der Waage 1, also, wenn diese nicht überlastet ist, federt die Feder 25 nicht ein. Die Gewichtskraft wird mithin über das aufgrund der Vorspannung der Feder 25 starre Federgehäuse 24 auf die Wägezelle 20 übertragen.

Überschreitet nunmehr die Gewichtskraft einen zulässigen Wert, der durch die Vorspannung und die Federkonstante der Feder 25 definiert ist, so kann der Träger 22 einfedern und kommt an der Gehäuseoberseite 26 zur Anlage. Der Träger 22 geht mithin auf Block und es kann nunmehr die Wägezelle 20 mit keiner höheren Kraft beaufschlagt werden. So ist auf einfache Weise eine Überlastsicherung für die Wägezelle 20 ausgebildet.

Um die Waagschale abnehmen zu können, umfasst der Träger 22 ein Innenteil 37, welches mittels zumindest eines Stiftes 36 lediglich verdrehgesichert ist. Die Waagschale kann mithin zusammen mit dem Sockel 21 und dem sich um das Innenteil 37 erstreckenden Teil des Trägers 22 abgenommen werden.

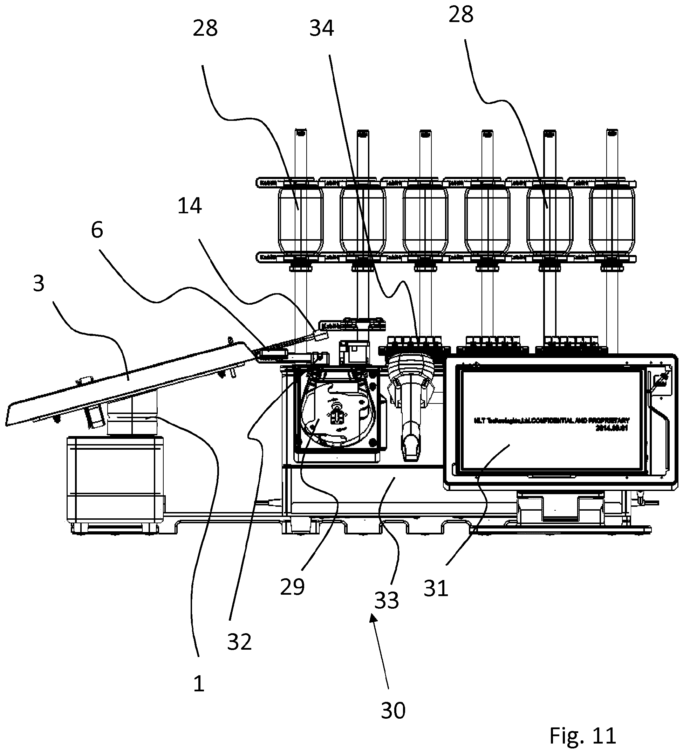

Fig. 11 zeigt eine Anlage 30 zum Herstellen einer medizinischen Zubereitung.

Die Anlage 30 umfasst eine Mehrzahl von Quellbehältern 28 sowie eine Pumpe 29.

Weiter umfasst die Anlage 30 zumindest eine Ventileinheit 34, mittels der der Zulauf aus den einzelnen Quellbehältern 28 gesteuert werden kann.

Über nicht dargestellte Schläuche werden die Quellbehälter 28 mit der Ventileinheit verbunden.

Ein Auslass der Ventileinheit 34 wird mit einem weiteren Schlauch (nicht dargestellt) mit dem Anschluss 14 des hier als Infusionsbeutel ausgebildeten Zielbehälters verbunden.

Die Anlage 30 ist computergesteuert und weist hier ein touchgesteuertes Display 31 zur Bedienung auf.

Zum Herstellen einer medizinischen Zubereitung werden nunmehr mittels der Pumpe 29 den Quellbehältern 28 die gewünschten Bestandteile entnommen und in den Zielbehälter transferiert. Der gesamte Dosiervorgang erfolgt computergesteuert.

Der Zielbehälter, von welchem nur der Anschluss 14 zu erkennen ist, ist auf der Waage 1 angeordnet. Mittels der Waage 1, die über eine elektronische Schnittstelle (nicht dargestellt) mit einer Steuerungseinheit der Anlage 30 verbunden ist, kann die Menge der dem Zielbehälter zugeführten Flüssigkeiten kontrolliert werden.

Die Anlage 30 ist modular ausgebildet, das heißt, die Waage 1 ist als separate Einheit ausgebildet, welche getrennt von einem Anlagenmodul 33, das insbesondere die Pumpe 29 und die Ventileinheit 34 umfasst, abgenommen werden kann.

Weiter zu erkennen ist, dass sich der Schlauchhalter 6 in etwa auf derselben Höhe wie ein am Anlagenmodul 31 angeordneter Schlauchhalter 32 befindet.

Aufgrund des horizontal angeordneten Schlauchhalters 6, welcher auf gleicher Höhe liegt wie der Schlauchhalter 32, ist das Risiko des unerwünschten Einleitens größerer Kräfte über den Anschluss 14 reduziert.

Die Waagschale 3 überspannt zumindest einen Teil des Zwischenraums zwischen Anlagenmodul 33 und Gehäuse 2 der Waage 1. So rückt der Anschluss 14 des Zielbehälters nah an das Anlagenmodul, was die Länge des Schlauches zum Anschluss des Zielbehälters klein hält.

Durch die Erfindung kann das Einlegen verschiedenartiger Zielbehälter insbesondere bei einem TPN-Compounder erleichtert werden.

### Bezugszeichenliste

- 1: Waage
- 2: Gehäuse
- 3: Waagschale
- 4: Seitenflügel
- 5: Abnehmbare Einrichtung oder Platte
- 6: Schlauchhalter
- 7: Zweites Befestigungsmittel oder Stift
- 8: Halter
- 9: Befestigungsmittel oder Spritzenhalter
- 10: Erstes Befestigungsmittel oder Stift
- 11: Kante
- 12: Spritze
- 13: Infusionsbeutel
- 14: Anschluss
- 15: Aufnahme
- 16: Ausnehmung
- 17: Öffnung
- 18: Loch
- 19: Bügel
- 20: Waageschale
- 21: Sockel
- 22: Träger
- 23: Spritze
- 24: Federgehäuse
- 25: Feder
- 26: Gehäuseoberseite
- 27: Kalibriergewicht
- 28: Quellbehälter
- 29: Pumpe
- 30: Anlage
- 31: Display
- 32: Schlauchhalter
- 33: Anlagenmodul
- 34: Ventileinheit
- 35: Träger
- 36: Stift
- 37: Innenteil
- 38: Linie

## Patentansprüche

1. Waage (1) zur Wägung eines Zielbehälters, insbesondere ausgebildet für eine Anlage (30) zum Herstellen einer medizinischen Zubereitung,
umfassend eine Waagschale (3) zum Einlegen eines Zielbehälters, **dadurch gekennzeichnet, dass** die Waagschale (3) eine abnehmbare Einrichtung (5), vorzugsweise eine Platte, umfasst, welche derart in zumindest zwei Orientierungen auf der Waagschale (3) angeordnet werden kann, dass eine vorher nach unten zeigende Seite der abnehmbaren Einrichtung (5) nach einer Drehung nach oben zeigt, wobei die abnehmbare Einrichtung (5) auf einer Seite zumindest ein Befestigungsmittel für einen Zielbehälter aufweist.

2. Waage (1) nach dem vorstehenden Anspruch, **dadurch gekennzeichnet, dass** das Befestigungsmittel als ein Spritzenhalter (9) bereitgestellt ist.

3. Waage (1) nach einem der vorstehenden Ansprüche, **dadurch gekennzeichnet, dass** die abnehmbare Einrichtung (5), vorzugsweise auf der Seite, auf der der Spritzenhalter (9) angeordnet ist, ein erstes Befestigungsmittel für einen ersten Infusionsbeutel (13) aufweist.

4. Waage (1) nach einem der vorstehenden Ansprüche, **dadurch gekennzeichnet, dass** das erste Befestigungsmittel für einen ersten Infusionsbeutel (13) als Formschlusselemente, insbesondere als Stifte (10), bereitgestellt ist.

5. Waage (1) nach einem der vorstehenden Ansprüche, **dadurch gekennzeichnet, dass** die Waagschale (3) ein zweites Befestigungsmittel für einen zweiten Infusionsbeutel aufweist.

6. Waage (1) nach einem der vorstehenden Ansprüche, **dadurch gekennzeichnet, dass** das zweite Befestigungsmittel für einen zweiten Infusionsbeutel als Formschlusselemente, insbesondere als Stifte (10), bereitgestellt ist.

7. Waage (1) nach einem der vorstehenden Ansprüche, **dadurch gekennzeichnet, dass** die Formschlusselemente der Waagschale (3) einen größeren Abstand aufweisen als die Formschlusselemente, welche die abnehmbare Einrichtung (5) aufweist.

8. Waage (1) nach einem der vorstehenden Ansprüche, **dadurch gekennzeichnet, dass** mittels der abnehmbaren Einrichtung (5) eine Aufnahme (15) für ein Kalibriergewicht (27) abdeckbar ist.

9. Waage (1) nach einem der vorstehenden Ansprüche, **dadurch gekennzeichnet, dass** die Waagschale (3) gegenüber einer Horizontalen schräg gestellt ist, insbesondere in einem Winkel (α) zwischen 5° und 40°, vorzugsweise zwischen 10° und 20°, gegenüber der Horizontalen angeordnet ist.

10. Waage (1) nach einem der vorstehenden Ansprüche, **dadurch gekennzeichnet, dass** die Waagschale (3) zwei, vorzugsweise nach oben, abgewinkelte Seitenflügel (4) aufweist.

11. Waage (1) nach einem der vorstehenden Ansprüche, **dadurch gekennzeichnet, dass** zwischen der Waagschale (3) und einer Wägezelle (20) ein Überlastschutz angeordnet ist und vorzugsweise der Überlastschutz eine vorgespannte Feder (25) zwischen einem Träger (22) für die Waagschale und der Wägezelle (20) umfasst.

12. Waage (1) nach einem der vorstehenden Ansprüche, **dadurch gekennzeichnet, dass** die Waagschale (3) und/oder die abnehmbare Einrichtung (5) bereitgestellt wird aus Aluminium oder einer Aluminiumlegierung, insbesondere mit einer Nickelbeschichtung.

13. Anlage (30) zum Herstellen einer medizinischen Zubereitung, umfassend eine waage(1) nach einem der vorstehenden Ansprüche, eine Mehrzahl von Quellbehältern (28) sowie einen Zielbehälter, der auf der Waage (1) positionierbar ist, wobei mittels der Anlage (30) Flüssigkeiten aus den Quellbehältern in den Zielbehälter transferierbar sind, wobei die Waage (1) ein austauschbares Befestigungsmittel für den Zielbehälter umfasst.

14. Anlage (30) nach dem vorstehenden Anspruch, **dadurch gekennzeichnet, dass** die Waage (1) mit einer elektronischen Steuerungseinrichtung für die Anlage (30) verbunden ist, wobei mittels der Waage (1) die in den Zielbehälter transferierte Flüssigkeitsmenge überprüfbar ist.

15. Anlage (30) nach einem der beiden vorstehenden Ansprüche, **dadurch gekennzeichnet, dass** die Waage (1) einen Schlauchhalter umfasst, der im Wesentlichen auf gleicher Höhe liegt wie ein Schlauchhalter (32) eines angrenzenden Anlagenmoduls (33).

## Claims

1. A balance (1) for weighing a target container, in particular designed for an installation (30) for producing a medical preparation, comprising a balance pan (3) for loading a target container, **characterized in that** the balance pan (3) comprises a removable device (5), preferably a plate ,
which can be arranged in at least two orientations on the balance pan (3), such that one side of the removable device (5), which was previously pointing downwards, points upwards after being rotated, wherein the removable device (5) has on one side at least one securing means for a target container.

2. The balance (1) according to the preceding claim, **characterized in that** the securing means is provided as a syringe holder (9).

3. The balance (1) according to one of the preceding claims, **characterized in that** the removable device (5), preferably on the side, on which the syringe holder (9) is arranged, has a first securing means for a first infusion bag (13).

4. The balance (1) according to one of the preceding claims, **characterized in that** the first securing means for a first infusion bag (13) is provided as form-fit elements, in particular as pins (10).

5. The balance (1) according to one of the preceding claims, **characterized in that** the balance pan (3) has a second securing means for a second infusion bag.

6. The balance (1) according to one of the preceding claims, **characterized in that** the second securing means for a second infusion bag is provided as form-fit elements, in particular as pins (10).

7. The balance (1) according to one of the preceding claims, **characterized in that** the form-fit elements of the balance pan (3) have a larger spacing than the form-fit elements of the removable device (5).

8. The balance (1) according to one of the preceding claims, **characterized in that** by means of the removable device (5) a seat (15) for a calibrating weight (27) can be covered.

9. The balance (1) according to one of the preceding claims, **characterized in that** the balance pan (3) is positioned obliquely with respect to a horizontal, in particular is arranged at an angle (α) of between 5° and 40°, preferably of between 10° and 20°, with respect to the horizontal.

10. The balance (1) according to one of the preceding claims, **characterized in that** the balance pan (3) has two, preferably upwardly angled side wings (4).

11. The balance (1) according to one of the preceding claims, **characterized in that** between the balance pan (3) and a load cell (20) an overload protection means is arranged and preferably the overload protection means comprises a pre-tensioned spring (25) between a support (22) for the balance pan and the load cell (20).

12. The balance (1) according to one of the preceding claims, **characterized in that** the balance pan (3) and/or the removable device (5) is provided made of aluminum or an aluminum alloy, in particular with a nickel coating.

13. An installation (30) for producing a medical preparation, comprising a balance (1) according to one of the preceding claims, a plurality of source containers (28) and a target container, which can be positioned on the balance (1), wherein by means of the installation (30) liquids can be transferred from the source containers into the target container, wherein the balance (1) comprises an interchangeable securing means for the target container.

14. The installation (30) according to the preceding claim, **characterized in that** the balance (1) is connected to an electronic control device for the installation (30), wherein by means of the balance (1) the amounts of liquid transferred into the target container can be verified.

15. The installation (30) according to either of the two preceding claims, **characterized in that** the balance (1) comprises a hose holder, which is substantially at the same height as a hose holder (32) of an adjoining installation module (33).

## Revendications

1. Balance (1) pour la pesée d'un conteneur cible, en particulier conçue pour une installation (30) pour la production d'une préparation médicinale, comprenant un plateau de balance (3) pour le chargement d'un conteneur cible, **caractérisée en ce que** le plateau de balance (3) comprend un dispositif amovible (5), de préférence une plaque,
qui peut être disposée selon au moins deux orientations sur le plateau de balance (3), de telle sorte qu'un côté du dispositif amovible (5), qui pointait précédemment vers le bas, pointe vers le haut après avoir été tourné, dans laquelle le dispositif amovible (5) a d'un côté au moins un moyen de fixation pour un conteneur cible.

2. Balance (1) selon la revendication précédente, **caractérisée en ce que** le moyen de fixation est prévu sous la forme d'un porte-seringue (9).

3. Balance (1) selon l'une quelconque des revendications précédentes, **caractérisée en ce que** le dispositif amovible (5), de préférence du côté, duquel le porte-seringue (9) est disposé, a un premier moyen de fixation pour une première poche de perfusion (13).

4. Balance (1) selon l'une quelconque des revendications précédentes, **caractérisée en ce que** le premier moyen de fixation pour une première poche de perfusion (13) est prévu sous la forme d'éléments d'assemblage par forme, en particulier de goupilles (10).

5. Balance (1) selon l'une quelconque des revendications précédentes, **caractérisée en ce que** le plateau de balance (3) a un deuxième moyen de fixation pour une deuxième poche de perfusion.

6. Balance (1) selon l'une quelconque des revendications précédentes, **caractérisée en ce que** le deuxième moyen de fixation pour une deuxième poche de perfusion est prévu sous la forme d'éléments d'assemblage par forme, en particulier de goupilles (10).

7. Balance (1) selon l'une quelconque des revendications précédentes, **caractérisée en ce que** les éléments à complémentarité de forme du plateau de balance (3) ont un espacement plus grand que les éléments à complémentarité de forme du dispositif amovible (5).

8. Balance (1) selon l'une quelconque des revendications précédentes, **caractérisée en ce qu'**au moyen du dispositif amovible (5), un siège (15) pour un poids de calibrage (27) peut être recouvert.

9. Balance (1) selon l'une quelconque des revendications précédentes, **caractérisée en ce que** le plateau de balance (3) est positionné obliquement par rapport à une horizontale, en particulier il est disposé à un angle (a) compris entre 5° et 40°, de préférence compris entre 10° et 20°, par rapport à l'horizontale.

10. Balance (1) selon l'une quelconque des revendications précédentes, **caractérisée en ce que** le plateau de balance (3) a deux, ailes latérales de préférence inclinées vers le haut (4).

11. Balance (1) selon l'une quelconque des revendications précédentes, **caractérisée en ce qu'**entre le plateau de balance (3) et une cellule de charge (20), un moyen de protection contre les surcharges est disposé et de préférence le moyen de protection contre les surcharges comprend un ressort précontraint (25) entre un support (22) pour le plateau de balance et la cellule de charge (20).

12. Balance (1) selon l'une quelconque des revendications précédentes, **caractérisée en ce que** le plateau de balance (3) et/ou le dispositif amovible (5) est prévu en aluminium ou en alliage d'aluminium, en particulier avec un revêtement en nickel.

13. Installation (30) pour la production d'une préparation médicinale, comprenant une balance (1) selon l'une quelconque des revendications précédentes, une pluralité de conteneurs sources (28) et un conteneur cible, qui peut être positionné sur la balance (1), dans laquelle, par l'installation (30), des liquides peuvent être transférés depuis les conteneurs sources dans le conteneur cible, dans laquelle la balance (1) comprend un moyen de fixation interchangeable pour le conteneur cible.

14. Installation (30) selon la revendication précédente, **caractérisée en ce que** la balance (1) est connectée à un dispositif électronique de commande pour l'installation (30), dans laquelle, par la balance (1), les quantités de liquide transférées dans le conteneur cible peuvent être vérifiées.

15. Installation (30) selon une des deux revendications précédentes, **caractérisée en ce que** la balance (1) comprend un porte-tuyau, qui est essentiellement à la même hauteur qu'un porte-tuyau (32) d'un module d'installation adjacent (33).
